# EUROPEAN PATENT APPLICATION

(11) **EP 1 701 525 A1**
(43) Date of publication of application: **13.09.2006**
(21) Application number: 05004899.0
(22) Date of filing: 07.03.2005
(51) Int. Cl.: H04M 1/725, H04M 19/04

(54) **Call alerting using different ring signals according to a play list**

(71) Applicant: Sony Ericsson Mobile Communications AB, 221 88 Lund (SE)
(72) Inventor: Sundström, Henrik, 247 36 Södra Sandby (SE); Jonsson, Göran, 245 38 Staffanstorp (SE)
(74) Representative: Dahnér, Christer

(57) **Abstract**

The invention concerns a method of using ring signal files in a portable communication device, such a portable communication device as well as a computer program product for performing the method. The portable communication device (10) comprises a radio communication unit (30) for receiving ring signal files (RSF1, RSF2) and incoming phone calls, a file storage (36) for storing received ring signal files and a play list file (PLF) associated with the received ring signal files and a ring signal handling unit (34), which sets the play list file for use in alerting incoming phone calls and plays ring signal files according to a playing order of the play list file. The radio communication unit orders, upon receiving incoming calls, the ring signal handling unit to select ring signal files according to the playing order and play these selected ring signal files for alerting a user of the incoming calls.

## Description

### TECHNICAL FIELD OF THE INVENTION

The present invention relates to the field of call alerting in portable communication devices. More particularly the present invention relates to a method of using ring signal files for call alerting in a portable communication device, such a portable communication device as well as a computer program product for performing the method.

### DESCRIPTION OF RELATED ART

It is known within the field of portable communication devices to download different ring signals for use by a user.

It is also known to associate a ring signal with a number provided in a contacts register. If a call is here made from another terminal to a portable communication device, where the portable communication device has a contacts register where a ring signal is set as being associated with the number of the calling terminal, the associated ring signal will be used in the portable communication device for alerting the user of the call. In this way the user knows who is calling by identifying the ring signal used.

US 6,697,470 describes a variation of this theme. According to this document user generated messages are entered via a microphone. These user generated messages can then be used for call alerting, where the use can be made on a per call basis, a per ring basis or depending on the phone number of the calling party. The document does not mention downloaded ring signals.

US 5,881,147 describes a phone that has a number of pre-stored ring signals. A user can here select among these ring signals and set one of them as a ring signal to be used for call alerting.

It would however be interesting for a user to use such downloaded ring signals in a more versatile manner and without the user of the portable communication device having to actively select ring signal each time he or she wants to change it.

### SUMMARY OF THE INVENTION

The present invention is directed towards solving the problem of allowing a user to more easily vary downloaded ring signal files when being alerted of a call by a portable communication device.

This problem is according to the invention solved through receiving a number of ring signal files and setting a play list file associated with at least some of said received ring signal files to be used for alerting incoming phone calls. The play list file has a certain playing order, which is used for call alerting in the portable communication device.

One object of the present invention is to provide a method of using ring signal files for alerting incoming phone calls in a portable communication device, which allows a user to more easily vary downloaded ring signal files when being alerted of a call by the portable communication device.

According to a first aspect of the present invention this object is achieved by a method of using ring signal files for alerting incoming phone calls in a portable communication device comprising the steps of:
receiving a number of ring signal files,
setting a play list file associated with at least some of said received ring signal files to be used for alerting incoming phone calls, and
upon receiving incoming calls from calling parties, selecting the ring signal files of the play list file according to a playing order and playing these selected ring signal
files, in order to alert a user of the incoming calls.

A second aspect of the present invention includes the features of the first aspect, further comprising the step of setting the playing order in said play list file.

A third aspect of the present invention includes the features of the first aspect, wherein a new ring signal file is selected according to the playing order each time a new incoming call is received.

A fourth aspect of the present invention includes the features of the third aspect, wherein a new ring signal file is selected independently of the identities of the calling parties.

A fifth aspect of the present invention includes the features of the third aspect, wherein a new ring signal file is selected for alerting of a certain incoming call, which is in the process of being alerted, only if a previous ring signal file, previously selected for alerting of the same call, is played to the end during the alerting of said call.

A sixth aspect of the present invention includes the features of the first aspect, wherein at least some ring signal files are received in a set of ring signal files during the same communication session with a ring signal file supplier.

A seventh aspect of the present invention includes the features of the sixth aspect, wherein the play list file is received together with the set of ring signal files.

An eighth aspect of the present invention includes the features of the first aspect, further comprising the step of creating the play list file based on inputs made by the user.

A ninth aspect of the present invention includes the features of the first aspect, wherein the ring signal files of a play list file are ring signal files associated with a sound theme.

A tenth aspect of the present invention includes the features of the first aspect, wherein the playing order is a sequential playing order.

An eleventh aspect of the present invention includes the features of the first aspect, wherein the playing order is a random playing order.

A twelfth aspect of the present invention includes the features of the first aspect, wherein the playing order comprises a playing cycle and the step of selecting ring signal files for playing according to the playing order comprises selecting a ring signal file only once during the playing cycle.

Another object of the present invention is to provide a portable communication device that allows a user to more easily vary the use of downloaded ring signal files when being alerted of a call by the portable communication device.

According to a thirteenth aspect of the present invention, this object is achieved by a portable communication device for alerting incoming phone calls and comprising:
a communication unit for receiving a number of ring signal files,
a radio communication unit for receiving incoming phone calls,
at least one file storage for storing said received ring signal files and a play list file associated with at least some of said received signals, and
a ring signal handling unit arranged to set said play list file to be used for alerting incoming phone calls and play ring signal files according to a playing order of said play list file,
wherein the radio communication unit is arranged to, upon receiving incoming calls from calling parties, order the ring signal handling unit to select the ring signal files of the play list file according to the playing order and play these selected ring signal files in order to alert a user of the incoming calls.

A fourteenth aspect of the present invention includes the features of the thirteenth aspect, wherein the ring signal handling unit is further arranged to set said playing order in said play list file.

A fifteenth aspect of the present invention includes the features of the thirteenth aspect, wherein the ring signal handling unit is arranged to select a new ring signal according to the playing order each time a new incoming call is received.

A sixteenth aspect of the present invention includes the features of the fifteenth aspect, wherein the ring signal handling unit is arranged to select a new ring signal file independently of the identities of the calling parties.

A seventeenth aspect of the present invention includes the features of the fifteenth aspect, wherein the ring signal handling unit is arranged to select a new ring signal file for alerting of a certain incoming call, which is in the process of being alerted, only if a previous ring signal file, previously selected for alerting of the same call, is played to the end during the alerting of said call.

An eighteenth aspect of the present invention includes the features of the thirteenth aspect, wherein the communication unit is arranged to receive at least some ring signal files in a set of ring signal files during the same communication session with a ring signal file supplier.

A nineteenth aspect of the present invention includes the features of the eighteenth aspect, wherein the play list file is received together with the set of ring signal files.

A twentieth aspect of the invention includes the features of the thirteenth aspect, wherein the ring signal handling unit is arranged to create the play list file based on inputs made by the user.

A twenty-first aspect of the invention includes the features of the thirteenth aspect, wherein the ring signal files of a play list file are ring signal files associated with a sound theme.

A twenty-second aspect of the invention includes the features of the thirteenth aspect, wherein the playing order is a sequential playing order

A twenty-third aspect of the invention includes the features of the thirteenth aspect, wherein the playing order is a random playing order.

A twenty-fourth aspect of the invention includes the features of the thirteenth aspect, wherein the playing order comprises a playing cycle and the ring signal handling unit is arranged to select a ring signal file only once during the playing cycle.

A twenty-fifth aspect of the invention includes the features of the thirteenth aspect, wherein it is a cellular phone.

Another object of the present invention is to provide a computer readable medium that allows a user to more easily vary the use of downloaded ring signal files when being alerted of a call by a portable communication device.

According to a twenty-sixth aspect of the present invention, this object is achieved by a computer program product for using ring signal files for alerting incoming phone calls in a portable communication device comprising:
computer program code, to make a portable communication device execute, when said program code is loaded in the portable communication device,
receive a number of ring signal files,
set a play list file associated with at least some of said received ring signal files to be used for alerting incoming phone calls, and
upon the portable communication device receiving incoming calls from calling parties, select the ring signal files of the play list file according to a playing order and play these selected ring signal files in order to alert a user of the incoming
calls.

The invention has the following advantages. It allows a user to vary the ring signals file use in a simple and automatic way, without the user having to manually change ring signal setting each time a change on a call by call basis is of interest. By providing a play list file it is furthermore easy for a user to vary the ring signals used by deleting and adding to the list. It is also easy for the user to change playing order. When, according to the sixth and eighteenth aspects of the invention, different sets of ring signal files are provided, it is also possible for a user to easily switch between different sets for call alerting, which provides further variation to the user. The invention is furthermore advantageous for ring signal file suppliers in that they can offer an attractive product to portable communication device users. The invention is furthermore easy to implement, which makes the cost of the invention low.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1 shows a portable communication device in the form of a cellular phone,
fig. 2 shows the phone in fig. 1 and another cellular phone connected to a cellular network having a ring signal file server,
fig. 3 shows a block schematic of the relevant parts of the phone in fig. 1,
fig. 4 shows a flow chart of a method of performing the method according to a first embodiment of the invention,
fig. 5 shows a flow chart of a method of performing the method according to a second embodiment of the invention, and
fig. 6 shows a CD Rom disc on which program code for executing the method according to the invention is provided.

### DETAILED DESCRIPTION OF EMBODIMENTS

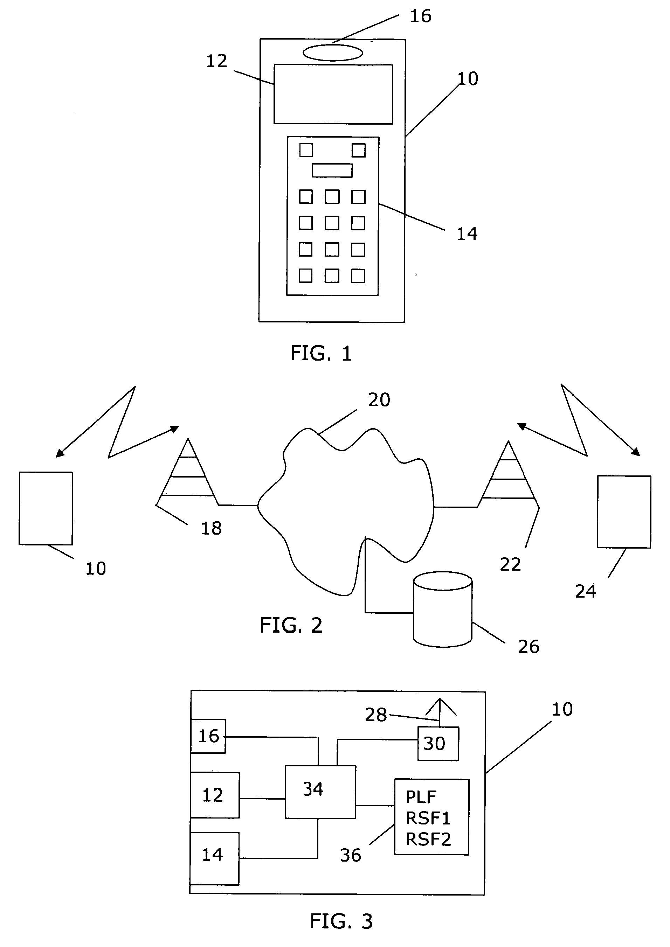

A portable communication device 10 according to the invention is shown in fig. 1. In the preferred embodiment the device is a cellular phone 10 having a display 12, a keypad 14 including a number of keys and a speaker 16. The keypad 14 is used for entering information such as selection of functions, responding to prompts, as well as placing and accepting phone calls, the display 14 is used for displaying functions and prompts to a user of the phone and the speaker 16 is used for outputting sounds like ring signals and voice from a calling party. The phone also includes an antenna, which is used for communication with other users via a network, and a microphone for receiving sound inputs from a user. However the antenna is in-built in the phone and hence not shown in the figure. The microphone is omitted in the figure because it is not related to the inventive idea. A cellular phone is just one example of a device in which the invention can be implemented. The invention can for instance also be used in a PDA (personal digital assistant), a palm top computer, a lap top computer or a smartphone. It does however have to be able to make and receive phone calls as well as download ring signals.

Fig. 2 shows the cellular phone 10 connected to a cellular network 20 via a first base station 18. A second cellular phone 24 is connected to the network 20 via a second base station 22. The network does furthermore have a ring signal file server 26 of a ring signal file supplier. The network is normally a second generation cellular network like a GSM network. It is of course also possible that the network is a more advanced cellular network like for instance a GPRS or a third generation cellular network like a WCDMA network. The network does furthermore not have to be a cellular network but can be some other type of network, such as Internet, a corporate intranet, a LAN or a wireless LAN provided that phone calls can be made and ring signal files downloaded. It is furthermore possible that the ring signal file server 26 is not provided in the cellular network. It can be provided by some other party, perhaps via another network. However it is important that the cellular phone 10 can access this server 26 and then preferably using the cellular network, although it should be realised that it is also possible for the cellular phone to receive ring signal files through other types of communication such as via different short range communications, like for instance IR communication or Bluetooth™ communications. In this case the portable communication device is equipped with a communication unit for this other type of communication.

Fig. 3 shows a part of the interior of the cellular phone 10 that is relevant for the present invention. The phone 10 includes an antenna 28 connected to a radio communication unit 30 for enabling radio communication with the network 20 of fig. 2. The radio communication unit 30 is connected to a ring signal handling unit 34, which ring signal handling unit 34 may include a media player functionality. The ring signal handling unit 34 is also connected to the display 12, to the speaker 16 and to the keypad 14 as well as to a file storage 36. The file storage 36 is here, for exemplification purposes only, shown as including three files, a first and a second ring signal file RS1 and RS2 as well as a play list file PLF.

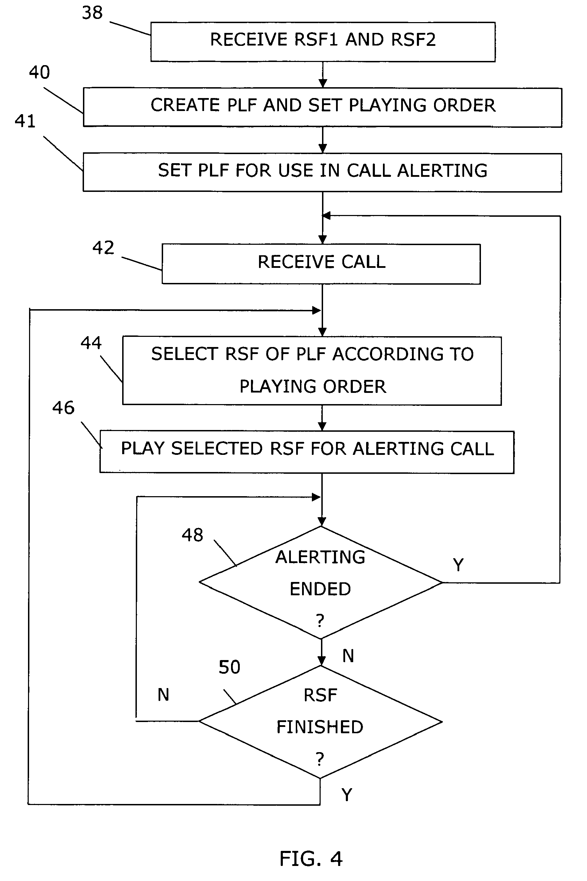

The functioning of the present invention according to a first embodiment will now be described in relation to the previously described fig. 1 - 3 together with fig. 4, which shows a flow chart of the first embodiment of a method according to the invention.

The phone 10 is capable of downloading ring signal files to be used for alerting a user of the portable communication device 10 of incoming calls. In order to do this the user can access the ring signal file server 26. The access and download may be performed via the ring signal handling unit 34, which may use messaging functionality provided in the phone like MMS or SMS. However, the access and download can just as well be performed by the user directly accessing this messaging functionality. In both cases a request is sent to the server 26 for downloading a number of ring signals files during a communication session between the phone and the server, and here as an example the ring signals files RSF1 and RSF2. In the session the user may be allowed to select between different sets of ring signal files and receive one or more such selected complete sets in the same session. The ring signal files are then received by the radio communication unit 30 via the antenna 28, step 38, and stored in the file storage 36 either by the ring signal handling unit 34 or by the previously mentioned messaging functionality. Thereafter the user is allowed to create a play list file and set a playing order, either directly after the ring signal handling unit 34 has downloaded the ring signal files or in dependence of if the user activates the ring signal handling unit 34. The user may here select all the ring signal files in the set, only some of the ring signal files in the set as well as add other ring signal files. Here the user can select the order in which the ring signal files in the set are to be played, which order can either be sequential, random or any other order. Once the user has made these selections, the ring signal handling unit creates the play list file PLF including pointers to the selected ring signal files, which are here RSF1 and RSF2, as well as a setting of the order in which they are to be played, step 40, and stores the play list file PLF in file the storage 36. In dependence of inputs of the user, the ring signal handling unit 34 thereafter sets the created play list file to be used for call alerting, step 55. It should here be noted that the user might create several play list files and can select any one of these to be used for call alerting. Thereafter the ring signal handling unit 34 informs the radio communication unit 30 that it will take care of all call alerting of incoming phone calls. It should here be realised that the user can remove this setting of both taking care of call alerting in the ring signal handling unit as well as switch to another play list file to be used in relation to call alerting.

Now the phone is ready for alerting the user of phone calls according to the order set in the play list file PLF.

Under the assumption that a call is made from the second cellular phone 24 to the cellular phone 10 according to the invention, the radio communication unit 30 communicates with the other phone 24 via the antenna 28 and the network 20 using normal cellular phone signalling in order to set up a connection between the phones. Once this has been done, i.e. the call is received, step 42, the radio communication unit 30 would normally start alerting the user of the call. As there is a setting in the radio communication unit 30 that alerting is to be provided via the ring signal handling unit 34, the radio communication unit 30 notifies the ring signal handling unit 34 to start alerting the received call. When this is done the ring signal handling unit 34 looks in the play list file PLF in the file storage 36 that is set for use for call alerting and selects a ring signal file according to the playing order of this play list file, step 44. If for the sake of exemplifying the present invention, the play list file indicates a sequential order beginning with RS1 followed by RS2 and it is the first call to be alerted, the ring signal handling unit 34 selects the first ring signal file RS1. Thereafter the ring signal handling unit 34 plays the selected ring signal file for alerting the call, step 46, by making the speaker 16 output sounds corresponding to the information in the ring signal file RS1. Thereafter the ring signal handling unit 34 investigates if alerting is to be ended, step 48, which is indicated by the radio communication unit 30 to the ring signal handling unit 34 if the user places the phone off hook, the calling party stops calling or if the call is transferred to a voice mail after a predetermined time. Any of these events are signalled to the ring signal handling unit 34 by the radio communication unit 30. In case alerting is ended in this way, the ring signal handling unit 34 stops playing the ring signal file and the phone returns to an idle state awaiting a new call, step 42. If however alerting is not ended, step 48, the ring signal handling unit 34 goes on and investigates if the file is ended, step 50, i.e. if it has played the ring signal file to the end. If it has not, the ring signal handling unit 34 goes back and investigates if alerting is ended, step 48. If the file is ended, step 50, the ring signal handling unit 34 goes back and selects a new ring signal file according to the playing order indicated in the play list file, step 44, and then plays this file, step 46, which could be the second ring signal file RSF2. Thereafter the ring signal handling unit 34 yet again investigates if alerting is to be ended, step 48.

After one such alerting of a call using one or more ring signal files has been performed, the ring signal handling unit uses the next ring signal file in the playing order when the phone receives another call, which might thus be the second ring signal file RSF2.

In this way different files are played each time a new call is received in the phone.

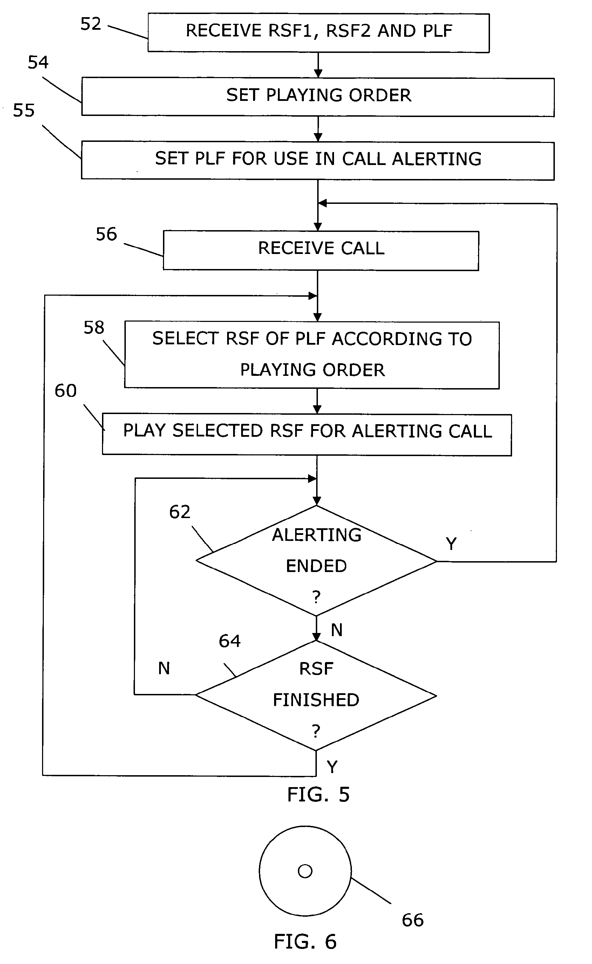

A second embodiment of the present invention will now be described with reference being made also to fig. 5, which shows a flow chart of a method according to this second embodiment of the present invention. In this embodiment the ring signal server 26 provides a play list file PLF together with the set of ring signals. Thus here the phone 10 receives the ring signal files and also the play list file in the same communication session, step 52, which can be received in the same way as in the first embodiment. These files are then transferred to file storage 36. When the user then wants to set a set play list order and play list file for call alerting, the ring signal handling unit 34 fetches the received play list PLF file from the file storage 36 and allows the user to make the settings. It should here be noted that it might be possible for the user to delete and/or add ring signal files to the play list file. Thereafter the user sets the playing order, step 54, and sets the file to be used for call alerting, step 55, whereupon the steps of receiving a call, step 56, selecting ring signal files according to playing order, step 58, playing selected ring signal file, step 60, determining if alerting is ended or not, step 62, and determining if the ring signal file has been played to the end or not, step 64, are performed in the same way as in the first embodiment.

It is possible that the downloaded ring signal files in the set are directed to the same theme, which can be for instance a cartoon theme, a space them, a special artist theme, heavy metal theme etc. It is thus possible that the ring signals are grouped together into an environment that is similar.

Another variation that is possible regarding both the described embodiments is that the playing order comprises a playing cycle, either sequential, random or any other specified order. The ring signals handling unit here keeps track of the already selected ring signals in the cycle and only selects ring signal files for call alerting not previously selected within a cycle.

The user may in one variation of the present invention not set the playing order. There can be a default playing order provided, especially in the case of the second embodiment of the present invention.

The calling party need not be another cellular phone but can be any other type of telecommunication user terminal such as a stationary phone or a cordless phone. It is possible to provide more file storages than the one shown in fig. 3 and ring signal files may then be stored in different file storages. What is important is that the ring signal handling unit has easy access to both the ring signal files and the play list file. The user may furthermore download ring signal files individually and create a play list file based on previously downloaded ring signal files. It does not necessarily have to be made in relation to a received set of ring signal files.

In the two embodiments described above the radio communication unit provided both ring signal file downloading as well as reception of phone calls. It should however be realised that there can be provided a separate communication unit for the download of ring signal files.

The ring signal handling unit according to the present invention is preferably provided in the form of one or more processors with corresponding memory containing the program code and the file storage is provided in the form of one or more memories. The radio communication unit is preferably provided in the form of an ASIC circuit.

The program code mentioned above can also be provided on a data carrier such as a CD ROM disc 66 as depicted in fig. 6 or an insertable memory stick, which will perform the invention when loaded into a computer or into a phone having suitable processing capabilities. The program code can also be downloaded remotely from a server either outside or inside the cellular network or be downloaded via a computer like a PC to which the phone is temporarily connected.

The present invention has several advantages. It allows a user to vary the ring signals used in a simple and automatic way, without having to manually change ring signal setting each time a change on a call by call is of interest. By providing a play list file it is furthermore easy for a user to vary the ring signals used by deleting and adding to the list. It is also easy for the user to change playing order. The user does therefore not have to edit profiles or set personal ring types. When different sets of ring signal files are provided, it is also possible for a user to easily switch between different sets for call alerting, which provides further variation to the user. The invention is furthermore advantageous for the ring signal file suppliers in that they can offer an attractive product to portable communication device users. The invention is furthermore easy to implement, since much of the functionality is already provided in the phone, like speaker, radio communication unit and antenna. It can be implemented by just some slight modifications of the software in the phone. This also makes the cost of the invention low.

## Claims

1. Method of using ring signal files for alerting incoming phone calls in a portable communication device (10) comprising the steps of:
receiving a number of ring signal files (RSF1, RSF2), (38; 52)
setting a play list file (PLF) associated with at least some of said received ring signal files to be used for alerting incoming phone calls, (41; 55), and
upon receiving incoming calls from calling parties (24), (42; 56), selecting the ring signal files of the play list file according to a playing order (44;58) and
playing these selected ring signal files, (46; 60), in order to alert a user of the incoming calls.

2. Method according to claim 1, further comprising the step of setting the playing order in said play list file, (40; 54).

3. Method according to claim 1 or 2, wherein a new ring signal file is selected according to the playing order each time a new incoming call is received.

4. Method according to claim 3, wherein a new ring signal file is selected independently of the identities of the calling parties.

5. Method according to claim 3 or 4, wherein a new ring signal file is selected for alerting of a certain incoming call, which is in the process of being alerted, only if a previous ring signal file, previously selected for alerting of the same call, is played to the end during the alerting of said call.

6. Method according to any previous claim, wherein at least some ring signal files are received in a set of ring signal files during the same communication session with a ring signal file supplier (26).

7. Method according to claim 6, wherein the play list file is received together with the set of ring signal files (52).

8. Method according to any of claims 1 - 6, further comprising the step of creating the play list file based on inputs made by the user (40).

9. Method according to any previous claim, wherein the ring signal files of a play list file are ring signal files associated with a sound theme.

10. Method according to any previous claim, wherein the playing order is a sequential playing order.

11. Method according to any of claims 1- 9, wherein the playing order is a random playing order.

12. Method according to any previous claim, wherein the playing order comprises a playing cycle and the step of selecting ring signal files for playing according to the playing order comprises selecting a ring signal file only once during the playing cycle.

13. Portable communication device (10) for alerting incoming phone calls and comprising:
a communication unit (30) for receiving a number of ring signal files (RSF1, RSF2),
a radio communication unit (30) for receiving incoming phone calls,
at least one file storage (36) for storing said received ring signal files and a play list file (PLF) associated with at least some of said received signals, and
a ring signal handling unit (34) arranged to set said play list file to be used for alerting incoming phone calls and play ring signal files according to a playing order of said play list file,
wherein the radio communication unit (30) is arranged to, upon receiving incoming calls from calling parties, order the ring signal handling unit to select the ring signal files of the play list file according to the playing order and play these selected ring signal files in order to alert a user of the incoming calls.

14. Portable communication device according to claim 13, wherein the ring signal handling unit is further arranged to set said playing order in said play list file.

15. Portable communication device according to claim 13 or 14, wherein the ring signal handling unit is arranged to select a new ring signal according to the playing order each time a new incoming call is received.

16. Portable communication device according to claim 15, wherein the ring signal handling unit is arranged to select a new ring signal file independently of the identities of the calling parties.

17. Portable communication device according to claim 15 or 16, wherein the ring signal handling unit is arranged to select a new ring signal file for alerting of a certain incoming call, which is in the process of being alerted, only if a previous ring signal file, previously selected for alerting of the same call, is played to the end during the alerting of said call.

18. Portable communication device according to any of claims 13 - 17, wherein the communication unit is arranged to receive at least some ring signal files in a set of ring signal files during the same communication session with a ring signal file supplier (26).

19. Portable communication device according to claim 18, wherein the play list file is received together with the set of ring signal files.

20. Portable communication device according to any of claims claim 13 - 19, wherein the ring signal handling unit is arranged to create the play list file based on inputs made by the user.

21. Portable communication device according to any of claims 13 -,20, wherein the ring signal files of a play list file are ring signal files associated with a sound theme.

22. Portable communication device according to any of claims 13 - 21, wherein the playing order is a sequential playing order.

23. Portable communication device according to any of claims 13 - 21, wherein the playing order is a random playing order.

24. Portable communication device according to any of claims 13 - 23, wherein the playing order comprises a playing cycle and the ring signal handling unit is arranged to select a ring signal file only once during the playing cycle.

25. Portable communication device according to any of claims 13 - 24, wherein it is a cellular phone.

26. A computer program product (66) for using ring signal files for alerting incoming phone calls in a portable communication device comprising:
computer program code, to make a portable communication device (10) execute, when said program code is loaded in the portable communication device,
receive a number of ring signal files (RSF1, RSF2),
set a play list file (PLF) associated with at least some of said received ring signal files to be used for alerting incoming phone calls, and
upon the portable communication device receiving incoming calls from calling parties (24), select the ring signal files of the play list file according to a playing order and play these selected ring signal files in order to alert a user of the incoming calls.
